# EUROPEAN PATENT SPECIFICATION

(11) **EP 0 483 573 B1**
(45) Date of publication and mention of the grant of the patent: **24.01.1996**
(21) Application number: 91117430.8
(22) Date of filing: 12.10.1991
(51) Int. Cl.: C09K 5/04

(54) **Azeotropic and/or azeotropelike mixtures and refrigeration or air conditioning systems using them as working fluids**
Azeotropische oder azeotropartige Gemische als Arbeitsflüssigkeiten für Kühl- und Klimaanlagen
Mélanges azéotropiques ou pseudo-azéotropiques et systèmes de refrigération ou de conditionnement d'air les utilisant comme fluides de travail

(30) Priority: 19.10.1990 JP 282569/90
(43) Date of publication of application: 06.05.1992
(73) Proprietor: DAIKIN INDUSTRIES, LIMITED, Osaka-shi, Osaka-fu (JP)
(72) Inventor: Watanabe, Koichi, Tokyo-to (JP); Sato, Haruki, Zama-shi, Kanagawa-ken (JP); Oshima, Susumu, Sakai Seisakuso Kanaoka Factory, Sakai-shi, Osaka-fu (JP); Noguchi, Masahiro, c/o Yodogawa, Seisakusho, Settsu-shi,Osaka-fu (JP)
(74) Representative: Schüler, Horst, Dr.

(56) References cited:
- EP-A- 0 299 614
- WO-A-91/09089
- WO-A-91/14751
- WO-A-91/16390
- PATENT ABSTRACTS OF JAPAN: 15 December 1988.
- PATENT ABSTRACTS OF JAPAN: 11 December 1987.

## Description

### Field of the Invention

The present invention relates to azeotropic and/or azeotrope-like mixtures which are useful as refrigerants, propellants for spray, etc.

### Background Art

Working fluids and refrigerants heretofore known include chlorofluorocarbon, hydrochlorofluorocarbon, fluorocarbon, hydrofluorocarbon, azeotropic mixtures of at least two of them and near-azeotropic compositions which are analogous thereto in components, etc. Among them, trichlorofluoromethane (R-11), dichlorodifluoromethane (R- 12), 1,2-dichloro-1,1,2,2-tetrafluoroethane (R-114), chlorodifluoromethane (R-22) and so on are chiefly used at present as working fluids for refrigeration and/or air conditioning systems. In recent years, however, the following problem has been pointed out. Chlorofluorocarbons released into the atmosphere would ascend to the stratosphere without decomposition because of taking a considerable time for decomposition and would decompose in the stratosphere, depleting the stratospheric ozone layer, whereby a serious adverse influence would be inflicted on the ecosystem including humans on earth. The international agreement recently made calls for the restriction of consumption and production of chlorofluorocarbons entailing a high risk of depleting the stratospheric ozone layer. Among the chlorofluorocarbons to be controlled are R-11, R- 12, R-114 and the like widely used as described above. The control of consumption and production of these refrigerants greatly affects our residential environment and the current social framework as a whole particularly because a demand for such refrigerants is increasing year by year with the spread of refrigeration and air conditioning systems. In consequence, there is an urgent need for the development of novel refrigerants benign or substantially benign to the ozone layer.

Numerous refrigerants which do not fall under the range of species to be controlled have been heretofore proposed. Among them are mixtures consisting essentially of tetrafluoroethane and difluoroethane which were proposed in Japanese Unexamined Patent Publication No.308084/1988 as working fluids applicable to the refrigeration and/or air conditioning systems. The publication, page 2, left upper column, discloses: "Known are two kinds of tetrafluoroethanes for use in the invention, namely 1,1,2,2- tetrafluoroethane (R-134) and 1,1,1,2-tetrafluoroethane (R- 134a). Since these tetrafluoroethanes are very similar to each other in properties, they can be used singly or in mixture." However, the publication does not specifically disclose the mixture of R-134 and 1,1-difluroethane (R-152a) according to the present invention.

The publication, page 2, left lower column and right lower column, refers to the mixture of R-134a and R-152a merely as follows: "When the mixture of the invention comprising R-134a and R-152a in molar ratio of about 1 : 99 to about 70 : 30 is used as a working fluid in a refrigerating cycle, a significantly improved refrigerating capacity is exhibited without reducing the coefficient of performance to a far greater extent than when R-134a and R- 152a are used singly." and "A mixture of R-134a and R-152a in molar ratio of about 40 : 60 to about 60 : 40 is an azeotropic or azeotrope-like mixture having the same temperature at the inlet and at the outlet of the heat exchanger. The refrigerating capacity of the mixture is improved by about 3% than when R-152a is used alone and by about 14% than when R-134a is used alone." Further the Examples in the publication do not show any specific data proved by use of even a mixture of R-134a and R-152a with the molar fraction contemplated in the present invention, i.e. less than 30 mol % of R-152a (see Table 1 on page 3, right upper column of Japanese Unexamined Patent Publication No.308084/1988).

In Japanese Unexamined Patent Publication No.308084/1988, there is no concrete disclosure nor suggestion about the azeotropic or azeotrope-like mixture of R-134 and R-152a with a specific molar fraction, i.e. less than 30 mol % of R-152a, according to the present invention nor about the unique performance or remarkable results which can be attained with the mixture.

Japanese Unexamined Patent Publication No.308084/1988 describes that R-134 and R-134a are similar to each other in properties as stated above. A number of facts which serve to disprove this view will be given below to substantiate that R-134 and R134a can not be regarded as equivalent compounds.

R-134 is well balanced in its chemical structure since each of two carbon atoms has one hydrogen atom bonded thereto, whereas R-134a is unbalanced since only a single carbon atom has two hydrogen atoms bonded thereto. Therefore it can never be recognized that R-134 and R-134a have similar properties in terms of molecular structure. As an additional evidence, the saturated vapor pressures of R- 134 and R-134a have been measured with the results shown in Table 1 given later for aiming to apply them into refrigeration and air conditioning systems. The results show that R-134a exhibits saturated vapor pressures about 1.25 to about 1.3 times higher than R-134. This means that the apparatus or systems using R-134a requires a mechanical structure which is more resistant to pressure by about 4 kg·f/cm than R-134. A compressor using R-134 needs about 1.2 to about 1.25 times the displacement piston volume required in using R-134a in order to achieve the same refrigerating capacity. A further difference is found between R-134 and R-134a as to the compatibility with lubricating oils essentially required in any refrigeration systems. Stated more specifically, R-134a is so poor in compatibility with ester-family oils at temperatures of up to -18°C where the separation into two phases would be observed, whereas R-134 coexisting with the same oils shows no phase separation at temperatures of -40°C or higher. In short, R-134 is pronouncedly different from R-134a in these technically important issues. Accordingly they can not be regarded as analogous to each other.

Furthermore, the present inventors' research confirmed that significant differences exist between the R-152a/R-134a mixtures and the R-152a/R-134 mixtures. Table 1 in Japanese Unexamined Patent Publication No.308084/1988 shows that the R-152a/R-134a mixtures with a molar fraction of about 40/60 can exhibit the maximum refrigerating capacity. This leads to a presumption that the R-152a/R-134a mixture approximately in the above molar fraction range has an azeotropic point, and is the minimum azeotrope.

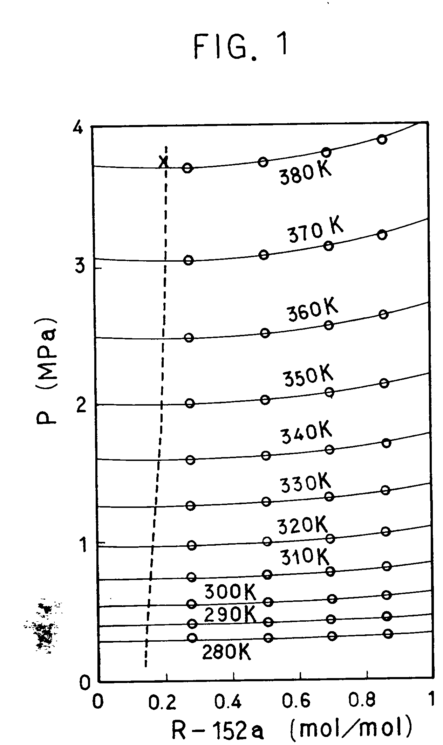

It was confirmed that a mixture of R-134 and R-152a containing slightly below 25 mol % of R-152a is the maximum azeotrope as shown in accompanying Figs. 1 to 3. The R- 134/R-152a mixtures used as refrigerants show the minimum refrigerating capacity when they contain less than 5 mol % of R-152a, as shown in Table 2. To be brief, R-134a/R-152a mixtures are significantly distinct from R-134/R-152a mixtures in these regards. The two kinds of mixtures have been also examined with respect to the flammability limit of gaseous mixtures. The results are that the mixtures which comply with the non-flammability limit as defined in the High Pressure Gas Control Act are R-134a/R-152a mixtures containing 30 to 35 mol % of R-152a, and R-134/R-152a mixtures containing 15 to 18 mol % of R-152a. Consequently the two kinds of mixtures differ from each other by about 2 times in the content of R-152a.

The numerous facts as stated above demonstrate that R- 134 and R-134a are not similar in properties from each other and thus can not be treated as equivalent compounds. This conclusion is contrary to the description given in Japanese Unexamined Patent Publication No.308084/1988.

### Disclosure of the Invention

In view of the foregoing current state of the art, the present inventors conducted extensive research and unexpectedly found that the R-134/R-152a mixtures with specified molar fraction which are not specifically disclosed in Japanese Unexamined Patent Publication No.308084/1988 can behave as an azeotropic or azeotrope-like mixture and can provide excellent results as a working fluid and/or a refrigerant.

According to the present invention, there are provided:
(1) an azeotropic and/or azeotrope-like mixture comprising 1,1,2,2-tetrafluoroethane and 1,1-difluoroethane, the amount of the latter compound being less than 30 mol %;
(2) an azeotropic and/or azeotrope-like mixture as defined under the item (1) which contains about 1 to about 18 mol % of 1,1-difluoroethane;
(3) an azeotropic and/or azeotrope-like mixture comprising 1,1,2,2-tetrafluoroethane and 1,1-difluoroethane with its composition corresponding to the point along the broken line in Fig. 1 indicating the isothermal bubble-point pressure; and
(4) a refrigeration or air conditioning system using as the refrigerant the mixture defined in any of the above-mentioned items (1) to (3).

1,1,2,2-Tetrafluoroethane (hereinafter called "R-134") for use in the present invention has the following principal properties.

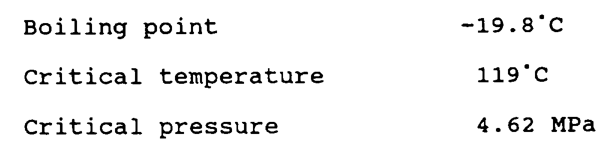

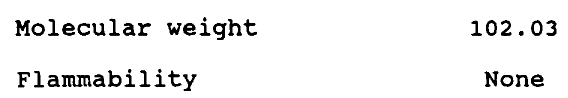

1,1-Difluoroethane (hereinafter called "R-152a") for use in the present invention has the following principal properties.

| | |
|---|---|
| Boiling point | -25°C |
| Critical temperature | 113.3°C |
| Critical pressure | 4.52 MPa |
| Molecular weight | 66.05 |
| Flammability | Flammable |

The above two substances used singly as refrigerants may exhibit the following advantages and disadvantages. Mixtures with the specificed molar fractions as defined in accordance with the present invention can allay or obviate the disadvantages of individual compounds and can effectively utilize the advantages of individual compounds.
(a) R-134 has the great advantage of non-flammability and the feature of exhibiting a higher coefficient of performance when used in the refrigerating cycle than R- 134a, but has the drawback of being compatible with only limited synthetic lubricating oils (e.g. polyglycol oil). R-134 is also preferred because of its zero ozone-depleting potential (zero ODP.), but is similar to R-22 in its contribution to the global warming.
(b) R-152a has the serious drawback of being flammable but shows an exceedingly high coefficient of performance and a higher refrigerating capacity with the same displacement piston volume than R-134. R-152a is disadvantageously low in its mutual solubility with mineral oils, but high in its mutual solubility with polyglycol oil, alkylbenzene oil or similar synthetic oils among available lubricating oils. R- 152a has zero ODP. and provides about 1/10 of the influence of R-22 on the global warming, hence is desirable.

Among the features of the mixture of the present invention is its zero ODP. Essentially the R-134/R-152a mixtures of the present invention contain less than 30 moles of R-152a per 100 moles of the mixture. The R-134/R-152a mixtures containing 30 mol % or more of R-152a would still remain flammable even if the mixture would leak from the apparatus, and mixed and diluted with air to a concentration of 7.5% or less. Hence the mixtures outside the above range of concentration is undesirable for use. When less than 30 mol % of R-152a is present, the mixtures are sufficiently flame-resistant or non-flammable to assure its safe use, and are higher in coefficient of performance than R-134a alone, hence advantageous for use.

Preferred mixtures of the present invention are those comprising R-134 and R-152a with the molar fractions corresponding (i.e. the composition of azeotrope) or the molar fractions close (i.e. the compositions of azeotrope-like mixture) to points along the broken line in the isothermal bubble-point pressure of Fig. 1.

It is desirable that the R-134/R-152a mixture of the present invention contain about 1 to about 18 moles of R- 152a per 100 moles of the mixture particularly in view of non-flammability.

The azeotropic and/or azeotrope-like mixture of the present invention may contain a stabilizer when so required. When a higher degree of stability is required under severe operating conditions, the mixture of the present invention may contain about 0.01 to about 5% of a stabilizer, based on the weight of the mixture. Examples of useful stabilizers are epoxides such as propylene oxide, 1,2-butylene oxide and glycidol; phosphites such as dimethyl phosphite, diisopropyl phosphite and diphenyl phosphite; thiophosphites such as trilauryltrithiophosphite; phosphine sulfides such as triphenoxyphosphine sulfide and trimethylphosphine sulfide; boron compounds such as boric acid, triethyl borate, triphenyl borate, phenyl borate, and diphenyl borate; phenols such as 2,6-di-tert-butyl para-cresol; nitroalkanes such as nitromethane and nitroethane; acrylates such as methyl acrylate and ethyl acrylate; other stabilizers such as dioxane, tert-butanol, pentaerythritol, paraisopropenyl toluene; etc.

The mixture of the present invention may further contain other compounds which would not adversely affect the contemplated objects and results of the present invention. Examples of such compounds are dimethyl ether, pentafluorodimethyl ether and like ethers; perfluoroethylamine and like amines; LPG; etc.

The components of the azeotropic and/or azeotrope-like mixture of the present invention are easily decomposable and free of chlorine atoms which would adversely affect the ozone layer so that the mixture of the present invention would be unlikely to entail the ozone layer-depleting issues.

Using the azeotropic and/or azeotrope-like mixtures of the present invention as refrigerants, refrigeration and air conditioning systems can be produced which have a higher refrigerating capacity and a higher coefficient of performance than using R-12 currently in wide use as a refrigerant. In this case, the possible increase in the temperature of discharged gas from the compressor is limited to a lesser extent so that the systems using the mixtures of the present invention can be operated under severer conditions with enhanced reliability. With these features, the mixtures of the present invention are especially useful for a household air conditioners, automotive air conditioners, electric refrigerators, etc.

When the azeotropic and/or azeotrope-like mixtures of the present invention are used as refrigerants in refrigeration or air conditioning systems, the refrigerants can be advantageously supplied into or withdrawn from the high pressure side as easily as single-component refrigerants, because on the high pressure side, the compositions in the vapor phase are substantially the same as in the liquid phase. In the mixture of the present invention, R-152a which is a flammable component has a lower molecular weight and a higher partial pressure than R-134 as a non-flammable component so that R-152a may more easily leak even from minute interstices. Consequently if there should occur a leakage in a system using the mixtures of the present invention as the refrigerants, the non-flammable component would increase in the refrigerant remaining within the systems. In this case, when the gaseous leakage has been found and the leaking portion has been repaired, followed by recharging the same refrigerant as initially charged, the resulting refrigerant in the system would become more non-flammable after recharge. This means that even if repairing and recharging operations would be repeatedly accomplished for gaseous leakage, the refrigerant would be unlikely to become more flammable.

Furthermore, since the azeotropic and/or azeotrope-like mixtures of the present invention dissolve polymer compounds in a low degree, the mixtures can be used without any change of materials conventionally used in designing refrigerating machines.

In addition, because the azeotropic and/or azeotrope-like mixtures of the present invention are excellent in thermal stability and no-flammable and flame-resistant, it is also possible to adopt the safety measures, devices and considerations conventionally employed for refrigerating machines using R-12 or the like.

The azeotropic and/or azeotrope-like mixtures of the present invention which are non-flammable and flame-resistant are also useful as a propellant for spray. Beneficially R-134 has the advantages that it can be produced from easily available materials with more ease than R-134a, producing lesser amounts of by-products than R-134a, hence is inexpensive.

### Brief Description of the Drawings

Figure 1 is a graph showing that the mixtures having the specific compositions according to the present invention exhibit azeotropic characteristics.

Figures 2 and 3 are the illustrations showing that the mixtures of the present invention show the typical characteristitcs of azeotrope-like mixtures.

Figure 4 is a graph illustrating the flammable limits of the mixtures of R-134 and R-152a.

### Examples

Given below are Examples and Reference Examples to clarify the features of the present invention in greater detail.

### Reference Example 1

Table 1 below shows the saturated vapor pressures KPa (kg·f/cm·abs) of R-134 and R-134a and the pressure ratios of R-134a/R-134.

**Table 1**

| Temperature (°C) | | R-134 | | R-134a | R-134a/R-134 |
|---|---|---|---|---|---|
| | Kpa (Kg.f/cm.abs) | | KPa (Kgf/cm.abs | | |
| -40 | 41.5 | (0.407) | 53.9 | (0.528) | 1.30 |
| -20 | 105 | (1.030) | 139 | (1.361) | 1.32 |
| 0 | 232 | (2.272) | 305 | (2.994) | 1.32 |
| +20 | 459 | (4.500) | 595 | (5.835) | 1.30 |
| +40 | 833 | (8.167) | 1060 | (10.363) | 1.27 |
| +60 | 1410 | (13.799) | 1750 | (17.131) | 1.24 |

### Example 1

It was confirmed, by the following procedures, that the mixtures of the present invention are azeotropic mixtures.

First, using the mixtures of R-134 and R-152a having different compositions, the bubble point pressure for each mixture was determined at each temperature between 280 K and 380 K to draw bubble point-pressure curves. More specifically, a sample mixture which was adjusted to a predetermined composition by weighing the components was confined into a pressure-resistant, sealed glass cell. By controlling the back pressure applied to a metal bellows-type, variable-volume cell connected to the sample cell made of glass through tubings, pressure was measured at the time when the interface between the vapor and liquid phases of the sample in the glass cell disappeared (i.e. the bubbles disappeared) at the top portion of the sample cell, and from each data the bubble point-pressure curves have been established.

Figure 1 shows the relationship between the compositions and the bubble point pressures of the mixtures of R- 134 and R-152a at each temperature. At temperatures of 320 K or above, there exist the points of compositions where we observed the minimum pressure, and such points with the minimum pressures at respective temperatures were linked together to depict the broken line. This broken line tends toward the high-concentration side of R-152a as the temperature increases. Since the mixtures with compositions corresponding to points on the broken line have lower vapor pressures than the saturation vapor pressures of any of R- 134 and R-152a, there is a strong likelihood that the maximum azeotropes are formed. In view of this, we have conducted the following experiment in order to confirm whether the mixtures with the compositions given by the points on the broken line are azeotropic mixtures or not.

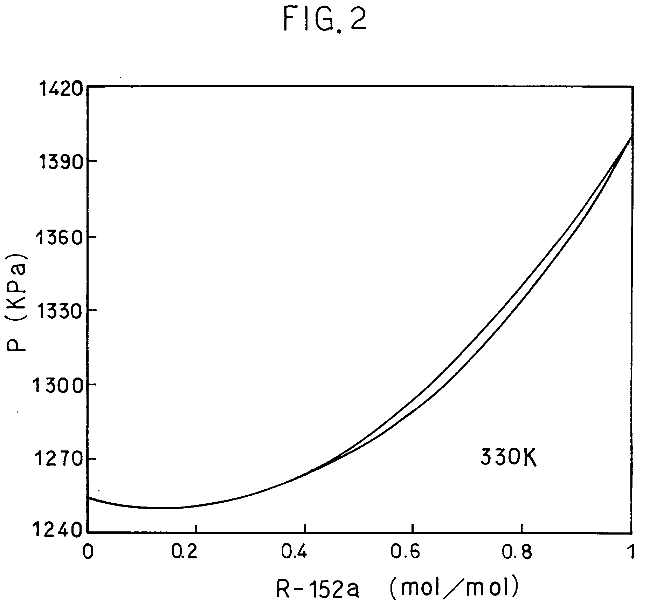

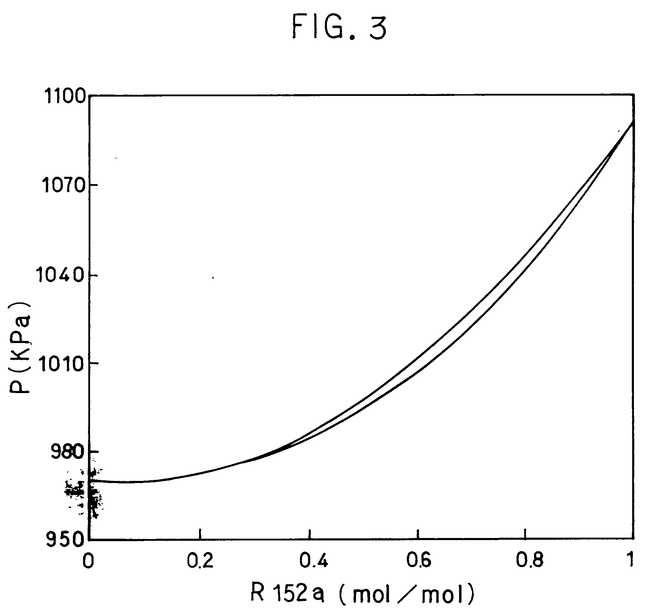

The sample mixtures of R-134 and R-152a with arbitrary compositions were prepared. The sample mixture was then confined in the pressure-resistant, sealed glass sample cell, and the sample was subjected to phase change from liquid phase to vapor phase and from vapor phase to liquid phase, respectively, and the pressures observed at the initiation of such a phase change were measured. The results of the measurement at 330 K and at 320 K are each shown in Figs. 2 and 3, respectively. In each case, it is clear that the discrepancy between the vapor-phase line and the liquidus-phase line is very small and that there is no discrepancy between the vapor-phase line and the liquidus-phase line at compositions which correspond to the minimum pressure points.

Further, the mixtures with compositions corresponding to the minimum pressures were each stirred thoroughly at the coexisting state of the liquid phase and the vapor phase. Thereafter, when the components of the samples were examined by the gas chromatography, it was confirmed that the compositions of the liquid phase and the vapor phase are in agreement with each other.

In this way, it was confirmed that the maximum azeotropes are formed at the points of the compositions corresponding to the minimum pressures.

### Example 2

A 1-ps output refrigerating machine was operated using as the refrigerant R-134a alone or the mixture of R-134 and R-152a. The coefficient of performance and the refrigerating capacity, together with the operating conditions are shown in Table 2. In each case, a polyglycol oil was used as a lubricant.

Only in the case of using R-134a alone, a compressor with smaller displacement piston volume by about 20% was employed.

From the results shown in Table 2, it is clear that the mixture of the present invention is superior in coefficient of performance to R-134a alone.

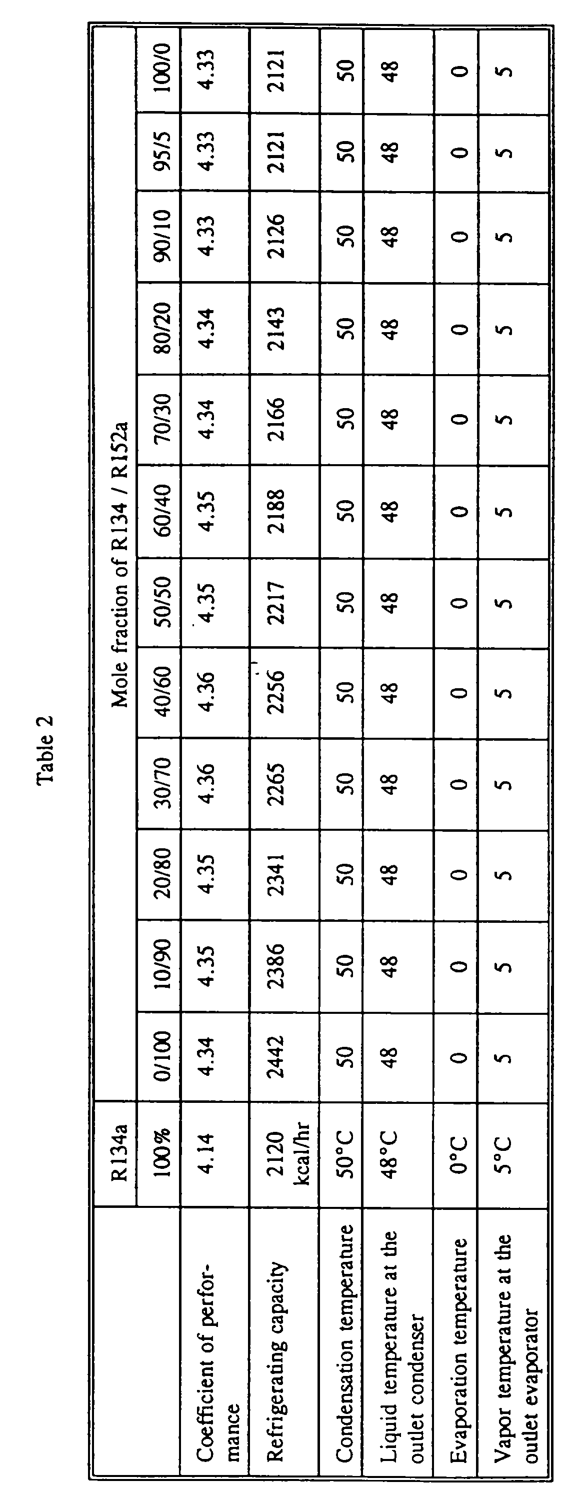

### Reference Example 2

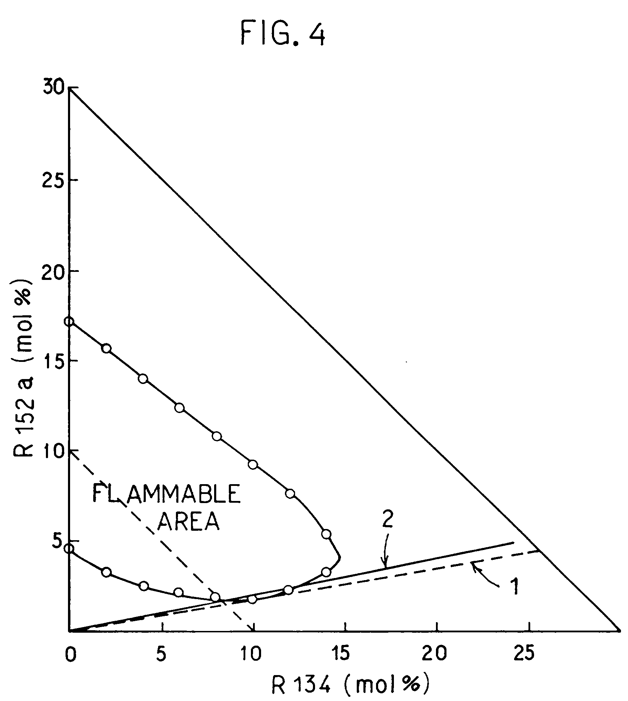

Figure 4 shows the flammable limit of the mixtures of R-134 and R-152a.

For determining the flammable limit, the explosion limits described in the General High-Pressure Gas Safety Rule, Art. 2, para. 1, items (a) and (b), were determined in accordance with the method set forth in the Container Safety Rule, Art. 2. More specifically, the mixtures of R-134 and R-152a were introduced into a spherical vessel with 2 liters in its inner volume and were stirred completely while observing the quantity of the mixtures by a manometer. Similarly, air was then introduced into the vessel. After the composition of the sample within the vessel became homogeneous, sparks were generated by an igniter to examine whether the samples with different compositions have been ignited or not.

In Fig. 4, the composition (mol %) of R-134 is plotted on the abscissa, whereas the composition (mol %) of R-152a is plotted on the ordinate. In any of these cases, the remaining portion was air.

In Fig. 4, within the area below the straight line 1 extending from left-lower part to right-upper part of the figure, the mixtures do not combust even if mixed with air in any proportions. Further, with respect to the mixtures with compositions within the area below the straight line 2, the lowermost limit for flaming never become 10 mol % or lower, and the differences in composition between the uppermost limit and the lowermost limit never exceed 20 mol %, whereby the mixtures do not correspond to the combustible gases defined by the High-Pressure Gas Control Act.

## Claims

1. An azeotropic and/or azeotrope-like mixture which contains only 1,1,2,2,-tetrafluoroethane and 1,1-difluoroethane, the amount of the latter compound being from 1 mol% to 30 mol%.

2. An azeotropic and/or azeotrope-like mixture as defined in claim 1 which contains 1 to 18 mol% of 1,1-difluoroethane.

3. An azeotropic and/or azeotrope-like mixtures as defined in claim 1 which contains 13 to 18 mol% 1,1- difluoroethane.

4. A refrigeration or air conditioning system using as the refrigerant the mixture defined in any of claims 1 to 3.

## Patentansprüche

1. Ein azeotropes und/oder azeotropartiges Gemisch, das nur 1,1,2,2-Tetrafluorethan und 1,1-Difluorethan enthält, wobei die Menge der letzteren Verbindung 1 Mol-% bis 30 Mol-% beträgt.

2. Ein azeotropes und/oder azeotropartiges Gemisch nach Anspruch 1, das 1 bis 18 Mol-% 1,1-Difluorethan enthält.

3. Ein azeotropes und/oder azeotropartiges Gemisch nach Anspruch 1, das 13 bis 18 Mol-% 1,1-Difluorethan enthält.

4. Ein Kühlanlagen- oder Klimaanlagensystem, bei dem das Gemisch, das in einem der Ansprüche 1 bis 3 definiert ist, als Kältemittel verwendet wird.

## Revendications

1. Mélange azéotropique et/ou pseudo-azéotropique, qui ne contient que du 1,1,2,2-tétrafluoroéthane et du 1,1-difluoroéthane, la quantité de ce dernier composé étant de 1% en moles à 30% en moles.

2. Mélange azéotropique et/ou pseudo-azéotropique suivant la revendication 1, qui contient 1% à 18% en moles de 1,1-difluoroéthane.

3. Mélange azéotropique et/ou pseudo-azéotropique suivant la revendication 1, qui contient 13% à 18% en moles de 1,1-difluoroéthane.

4. Système de réfrigération ou de conditionnement d'air utilisant comme réfrigérant le mélange défini dans l'une quelconque des revendications 1 à 3.
